# EUROPEAN PATENT SPECIFICATION

(11) **EP 2 623 768 B1**
(45) Date of publication and mention of the grant of the patent: **25.06.2014**
(21) Application number: 12153815.1
(22) Date of filing: 03.02.2012
(51) Int. Cl.: F03D 1/00, B66C 1/10

(54) **Lifting frame for lifting a wind turbine rotor blade, method of mounting a wind turbine rotor blade to a wind turbine rotor hub and method of assembling a wind turbine rotor**
Heberahmen zum Heben eines Windturbinenblatts, Verfahren zum Montieren eines Windturbinenblatts auf eine Windturbinennabe und Verfahren zum Anordnen eines Windturbinenrotors
Cadre de levage pour lever une pale d'éolienne, procédé de montage d'une pale d'éolienne à un moyeu de rotor d'éolienne et procédé d'assemblage d'un rotor d'éolienne

(43) Date of publication of application: 07.08.2013
(73) Proprietor: Siemens Aktiengesellschaft, 80333 München (DE)
(72) Inventor: Lynderup, Henrik Fomsgaard, 8832 Skals (DK); Oestergaard, Thomas, 6000 Kolding (DK)

(56) References cited:
- EP-A1- 2 084 098
- WO-A1-2010/124744
- WO-A1-2010/147480

## Description

The present invention relates to a lifting frame for lifting a wind turbine rotor blade to a rotor hub by use of a lifting device. In addition, the invention relates to a method of mounting a wind turbine rotor blade to a wind turbine hub and to a method of assembling a wind turbine rotor.

When mounting a wind turbine rotor to a wind turbine assembling the blades and the hub is often done on the ground and the blade/hub assembly is then lifted to a nacelle on top of a wind turbine tower by use of a crane. However, with the wind turbine rotor blades, and hence the rotors, becoming larger the area needed for mounting the rotor blades to the hub on the ground is a constraining factor. A further constraining factor is the size of the crane that is needed for mounting large rotor blade/hub assemblies in one piece to the nacelle.

A further drawback of mounting the assembled rotor in one piece to the nacelle is that the rotor needs to be turned by 90° in mid air. With large rotors this is a rather difficult task.

Moreover, assembling the rotor before mounting it to the nacelle is difficult if the wind turbine is seabased.

Hence, it has been proposed to premount the hub to the nacelle and then lift the blades individually to the hub for mounting them. To do so, the mounting procedure comprises the steps of rotating the rotor hub to an orientation such that the first blade can be mounted, then rotating the rotor hub further to a position which allows for mounting the second rotor blade and then again rotating the rotor hub to a position which allows for mounting the third rotor blade.

Two different ways of mounting the blades to the hub are known. For example, US 2005/0019166 A1 discloses a method in which the rotor blades are mounted to a hub at the nacelle in a vertical orientation. The rotor blades are held by a frame comprising a clamping device for clamping the blade. By use of wires the blade is tilted from the horizontal orientation to the vertical orientation after it has been lifted off the ground.

The other way of mounting rotor blades to a hub at the nacelle is to mount the blades in the horizontal orientation. This is, for example, described in US 2006/0147308 A1. When mounting the blade in horizontal orientation it is not necessary to tilt the blade. Like in the case of mounting the rotor blades in the vertical orientation lifting frames may be used for mounting the rotor blades in the horizontal orientation. Such lifting frames are, for example, disclosed in EP 1 925 582 B1, EP 1 925 583 B1 and EP 2 084 098 B1.

However, rotating the rotor hub when the rotor is out of balance due to not all rotor blades being mounted requires a high force if, like in direct drive wind turbines, no gear box is present which eliminates the possibility of using a portable motor for turning the rotor hub.

With respect to the mentioned state of the art it is a first objective of the present invention to provide a lifting frame which allows for an advantageous method of mounting wind turbine rotor blades to a rotor hub that is already located on top of a wind turbine tower. It is a second objective of the present invention to provide an advantageous method of mounting a wind turbine rotor blade to a rotor hub located at the top of a wind turbine tower. It is a third objective of the present invention to provide an advantageous method of assembling a wind turbine rotor when the hub is already located at the top of a wind turbine tower.

The first objective is achieved by a lifting frame as claimed in claim 1. The second objective is achieved by a method of mounting a wind turbine rotor blade to a rotor hub as claimed in claim 10, and the third objective is achieved by a method of assembling a wind turbine rotor as claimed in claim 11. The depending claims contain further developments of the invention.

An inventive lifting frame for lifting a wind turbine rotor blade to a rotor hub by use of a lifting device connectable to the lifting frame comprises:
- a main frame extending in a main frame span direction from a first main frame end to a second main frame end;
- a sub frame extending in a sub frame span direction from a first sub frame end to a second sub frame where the first sub frame end comprises fixing means for fixing it to a blade mounting section of the rotor hub and where the second sub frame end is connected to the first main frame end by means of a hinge such that the main frame and the sub frame can be tilted into a first tilt position relative to each other, in which the sub frame span direction includes an angle with the main frame span direction, in particular an angle of 30°, and into a second tilt position relative to each other, in which the sub frame span direction runs parallel to the main frame span direction,
- a blade mount being located at the main frame and designed for receiving a wind turbine rotor blade such that the span direction of the blade runs substantially parallel to the main frame span direction and that the root end projects beyond the first end of the main frame, and
- a means for moving the rotor blade along the main frame span direction when the sub frame and the main frame are in the second tilt position relative to each other. The inventive lifting frame is particularly suitable for use with a crane as lifting device. According to an embodiment of the invention, the means for moving the rotor blade along the main frame span direction is a means for varying the length of the sub frame in the sub frame span direction from a first length to a second length shorter than the first length. In this embodiment, the root end of a blade mounted to the main frame projects beyond the first end of the main frame by a length less than the first length of the sub frame.

The fixing means for fixing the first sub frame end to a blade mounting section and/or the means for varying the length of the sub frame may, in particular, be hydraulically driven. In this case, the means for varying the length of the sub frame may be formed by one or more pistons connecting the first sub frame end to the second sub frame end.

The inventive lifting frame allows for performing the inventive method of mounting a wind turbine rotor blade to a rotor hub. In this method, the blade is mounted with the blade mounting section of the rotor hub showing upwards by 30° with respect to the horizontal direction. In the inventive method, the rotor blade is lifted with the main frame span direction being parallel to the horizontal direction and the sub frame is fixed to the mounting section with the sub frame and the main frame being in the first tilt position relative to each other. If the sub frame span direction includes an angle of 30 degree with the main frame span direction, the main frame span direction extends still horizontal, and so does the rotor blade. After the sub frame has been fixed to the mounting section the sub frame and the main frame are brought into the second tilt position relative to each other. Then, the rotor blade is moved towards the mounting section after the sub frame and the main frame have been brought into the second tilt position relative each other. Moving the blade can, e.g., be done by reducing the length of the sub frame from a first length to a second length. The rotor blade is mounted to the mounting section with the sub frame being in the second tilt position and having the second length.

The inventive method and the inventive lifting frame allow for lifting and handling the rotor blade by a lifting device, e.g. a crane, in horizontal position until the sub frame of the lifting frame has been fixed to the mounting section of the rotor hub. Not until then the rotor blade is turned into the orientation where its root can be fixed to the mounting section of the rotor hub. In other words, the rotor blade is not turned in mid air, i.e. with a free floating axis of rotation, but with a fixed axis of rotation, both in position and orientation.

When, in difference to the present invention, the rotor blade is turned in mid air the aerodynamic influence on the blade may change position and orientation of the axis of rotation depending on the wind direction. This could lead to a more unpredictable behavior of the rotor blade, in particular, with increasing wind speed. As a consequence, lower wind limits may be required if rotor blades shall be mounted in an orientation that is angled with respect to the horizontal direction, which, in turn increase weather down time.

With the sub frame fixed to the mounting section of the rotor hub, on the other hand, aerodynamic influence on the blade during rotating it does not lead to an unpredictable behavior since the axis of rotation is fixed in position and orientation. As a consequence, handling of the rotor blade during rotation of the rotor blade is easier, even in case of relatively high wind speeds.

The fixing means for fixing the first sub frame end to a blade mounting section may comprise a clamping device which can opened and closed and which is designed such that it can be set on a flange of a blade mounting section when it is open and which can be fixed to the flange by closing it.

Fixing by means of a clamping device is a relatively simple and effective method of fixing the sub frame to the mounting section. If the mounting section itself is not suitable for the grip of such a clamping device, an auxiliary tool providing, e.g. a flange that can be gripped by the clamping tool, can be attached to the mounting section. An alternative auxiliary means could, e.g., be one or more pins projecting over the rotor hub surface close to the mounting section. In this case, the fixing means for fixing first sub frame end to a blade mounting section could comprises at least one funnel shaped pin receptor. However, in particular with new hubs it is possible to already integrate such a flange, pin, or an other auxiliary means into the mounting section.

In order to prevent the sub frame from unintentionally returning into the first tilt position when the sub frame is fixed to the mounting section of the hub, the lifting frame may comprise a locking mechanism for locking the sub frame to the main frame in the second tilt position.

According to a advantageous development of the inventive lifting frame, the main frame is equipped with a connecting means for connecting it to a crane hook, where the connecting means comprises a tensioning winch, pulleys located at, or close to, the first main frame end and the second main frame end, at least one rope that runs along the pulleys and that is wound around the tensioning winch, and a drive motor for driving the tensioning winch. Such a design of the connecting means allows for equally distributing the load when the sub frame is fixed to the mounting section and the rotor blade is rotated in place.

The inventive method can be part of a method of assembling a rotor while the rotor hub is already located at the top of a wind turbine tower. The method comprises the steps of:
- fixing the rotor hub in a first orientation in which one of the mounting sections shows downwards and the remaining two mounting sections show upwards by 30° with respect to the horizontal direction;
- mounting a first rotor blade to one of the mounting sections showing upwards by 30° by using the inventive method of mounting a wind turbine rotor blade to a rotor hub;
- releasing the rotor and rotating the rotor to a new orientation in which the mounted rotor blade shows downwards and fixing the rotor hub in this new orientation;
- mounting the further rotor blades by using the inventive method of mounting a wind turbine rotor blade to a rotor hub.

The inventive method of assembling a rotor can be done without actively driving the rotor since rotating the rotor such that the mounted rotor blade shows downwards can be done by using the gravity pull on the rotor blade. Hence, the inventive method of assembling a rotor is particularly suitable for assembling rotors of direct drive wind turbines.

Further features, properties and advantages of the present invention will become clear from the following description of embodiments in conjunction with the accompanying drawings.
Figure 1 shows a step of the inventive method in which the rotor blade has been lifted to the hub by means of a lifting frame with the sub frame in the first tilt position.
Figure 2 shows the rotor blade of figure 1 with the sub frame fixed to a mounting section of the rotor hub.
Figure 3 shows the rotor blade of figure 2 after the sub frame and the main frame have been brought into the second tilt position relative to each other, and the length of the sub frame has been reduced so that the rotor blade can be mounted to the mounding section.
Figure 4 shows, in a sectional view through the main frame, a rotor blade held therein in a first orientation.
Figure 5 shows a rotor blade held in the main frame of Figure 4 in a second orientation.
Figures 6 and 7 show how the load distribution is handled when the sub frame and the main frame are brought from the first tilt position into the second tilt position.
Figure 8 shows an alternative embodiment of the lifting frame.

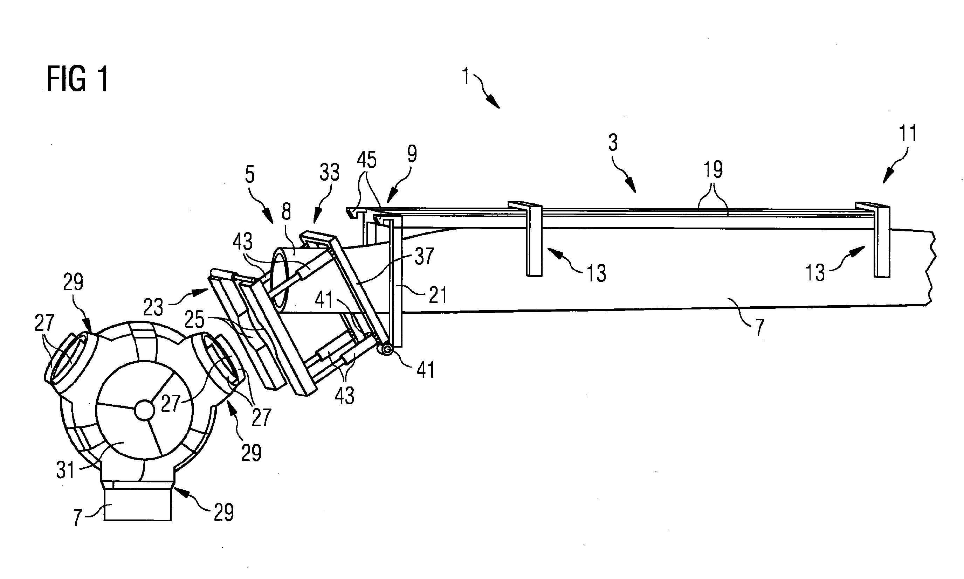

A first embodiment of the lifting frame and the method of mounting a wind turbine rotor blade to a rotor hub which is already located at a top of a wind turbine tower will be described with respect to figures 1 to 3.

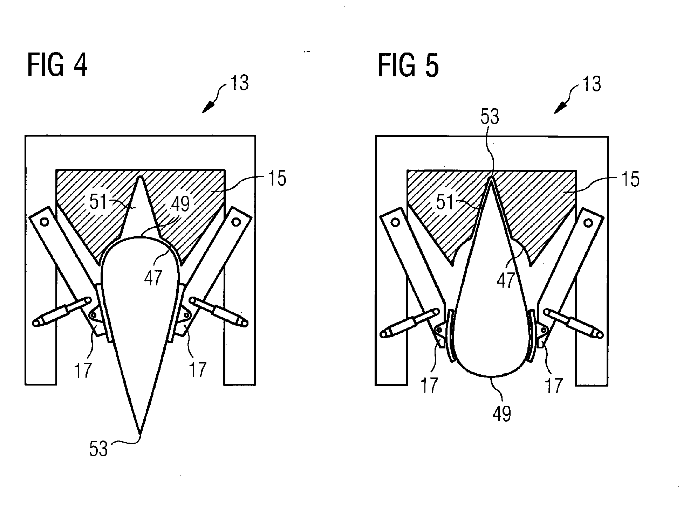

The inventive lifting frame 1 comprises a main frame 3 with a means for holding a wind turbine rotor blade 7, and a sub frame 5 that is connected to the main frame 3 by means of a hinge. The main frame 3 extends along a main frame span direction from a first main frame end 9 to a second main frame end 11 and is equipped with a blade mount 13 for holding a wind turbine rotor blade 7 such that is span direction run parallel to the span direction of the main frame 3. In the present embodiment, the blade mount is formed by two sections 13 with seats 15 which are spaced apart from each other along the main frame span direction. Furthermore, the blade mount sections 13 comprise clamping means 17 for holding the blade in the main frame 3. The seat 15 and a clamping means 17 will be described later with respect to figures 4 and 5.

The first and second main frame ends 9,11 are connected to each other by beams 19 which run parallel to each other and parallel to the main frame span direction and which extend beyond the blade mount section 13 that is close to the first main frame end 9. The first main frame end 9 is formed by rods 21 extending from the beams 19 in a direction that is perpendicular to the beams 19 and to the plane which runs through the parallel beams 19. The length of the rods 21 is chosen such that they project over the edge of a blade held in the main frame 3 by means of the blade mount.

The sub frame 5 comprises a first sub frame end 23 that is equipped with a fixing means 25 for fixing the first sub frame end to a flange 27 of a rotor blade mounting section 29 of a rotor hub 31. A second sub frame end 33 is formed by a box-like framework with an open side 35. The framework 33 is formed by two rods 37 the lengths of which correspond to the length of the rods 21 extending from the beams 19 of the main frame 3, which rods 37 are connected to each other by a cross beam 39. Hinges 41 connect the ends of the beams 21 and 37 that are farthest away from the main beams 19 and the cross beam 39, respectively. The hinges 41 of the present embodiment are designed such that the rods 21, 37 of the main frame 3 and the sub frame 5, respectively, can at least brought into a first tilt position, in which the beams 21 of the main frame 3 include in angle of 30 degree with the beams 37 of the sub frame 5, and a second tilt position, in which the rods 21 of the main frame run parallel to the rods 37 of the sub frame 5. While, in the first tilt position, the span direction of the main frame 3 and the span direction of the sub frame 5 include an angle of 30 degree the span directions of the main frame 3 and the sub frame 5 run parallel to each other in the second tilt position.

In the present embodiment, the first sub frame end 23 is connected to the second sub frame end 33 by means of hydraulic pistons 23 which run parallel to the span direction of the sub frame 5 and allow for varying the length of the sub frame along the sub frame span direction. The length can be varied between a first length in which the first sub frame end 23 projects beyond the root of the rotor blade 7 that is fixed to the main frame 3 and a second length that is shorter than the first length.

By means of hooks 45 that are located at the first end 9 of the main frame 3 and show towards the sub frame 5 the sub frame can be secured in the position were the rods 21 of the first main frame end 9 and the rods 37 of the second sub frame end 33 run parallel to each other. The cross beam 39 at the second end of the sub frame 5 is dimensioned such that the hooks 45 can snap in to hold the cross beam 39 in place.

The lifting frame 1 described so far is used in mounting a wind turbine rotor blade 7 to a mounting section 29 of a rotor hub that is already located at the top of a wind turbine tower.

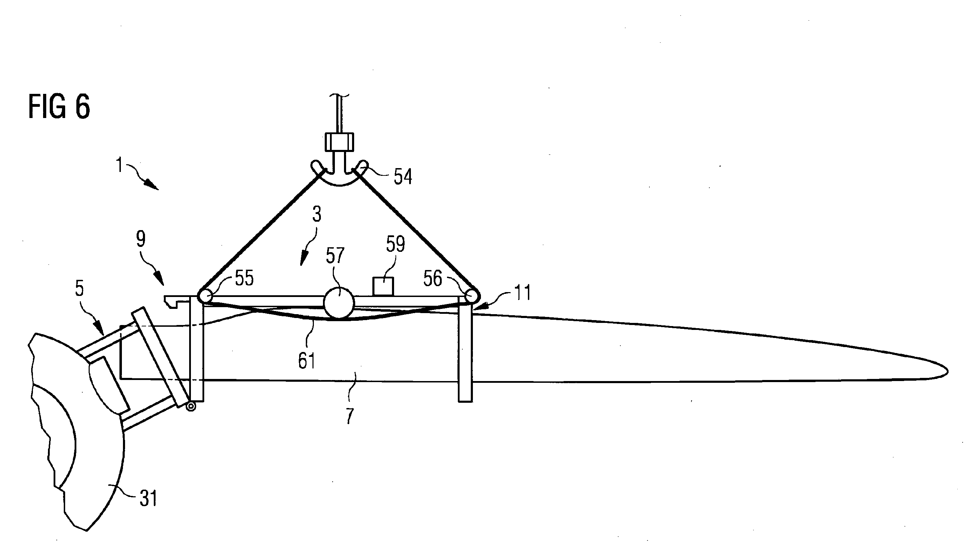

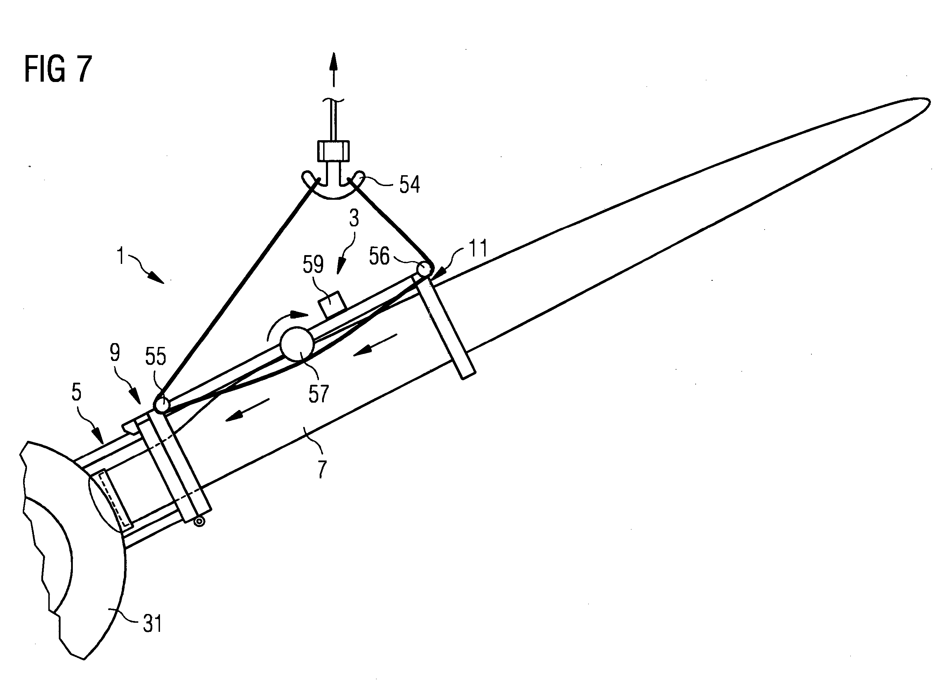

For the mounting process the main frame 3 is connected to a lifting device, which will typically be a crane, through connecting means by which the main frame 3 can be connected to a crane hook or the like. The connecting means will be discussed in more detail with respect to figures 6 and 7 later.

At the beginning of the mounting process, the main frame 3 will be set on a rotor blade 7 that rests on the ground with the leading edge or the trailing edge showing upwards. When the main frame 3 is lowered onto the rotor blade 7 the sub frame 5 will typically be in the second tilt position, in which its span direction run parallel to the span direction of the main frame 3. By this measure, the rotor blade 7 can more or less rest on the ground. However, if the rotor blade rests on a platform with a sufficient higth above the ground level it may be possible to lower the lifting frame 1 onto a rotor blade 7 with the sub frame being in its first tilt position, were the span directions of the main frame 3 and the sub frame 5 cross each other with an angle of 30°. In this case, the platform or the like needs to be on an elevated level above ground so that enough space below the root section of the rotor blade and the ground is left to allow the sub frame 5 to be in the first tilt position.

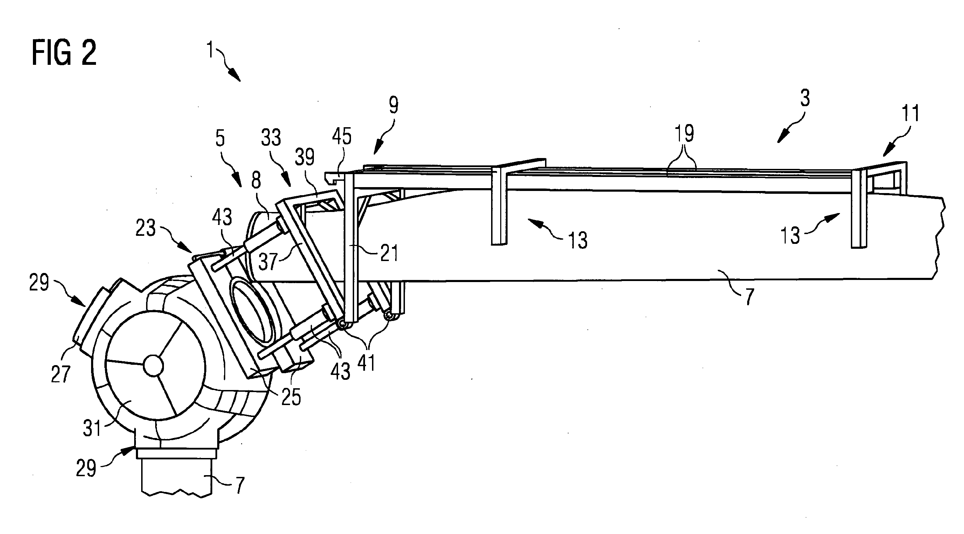

After the main frame 3 has been fixed to the rotor blade 7 the blade is lifted by means of the crane (or any other suitable lifting means) and kept horizontal during the lifting process. Once the higth of the blade corresponds substantially the high of the mounting section 29 of the rotor hub 31 the sub frame 5 is brought into the first tilt position if the sub frame is not already in this tilt position. This situation is shown in figure 1. Then, the lifting frame 1 is carefully moved towards the mounting section 29 while the clamps representing in the fixing means 25 at the first sub frame end 23 are open so that the first sub frame end 23 can be moved over the flange 27 of the mounting section. After the first sub frame end 23 has been moved over the flange 27 the clamps are closed in order to fix the sub frame 5 to the mounting section 29. This situation is shown in Figure 2. In case the mounting section is not equipped with a flange that is suitable for the described clamping, an auxiliary device may be fixed to the rotor hub 31 that provides a flange or any other suitable means which can act as an abutment for the clamps. Such an auxiliary device may also be advantageous if there is already a flange or the like in the mounting section which flange shall be protected from the forces acting due to the clamping.

With the sub frame 5 fixed to the mounting section 29 of the rotor hub 31 the main frame 3 can be further lifted by means of the crane which leads to a rotation of the main frame 3 about a rotation axis running to through the hinges 41. This rotation brings the sub frame 5 and the main frame 3 from the first tilt position into the second tilt position relative to each other, i.e. into a tilt position in which the span direction of the sub frame 5 runs parallel to the span direction of the main frame 3 and, hence, parallel to the span direction of the rotor blade 7. In order to prevent the root 8 of the rotor blade 7 from beating against the mounting section 29 when rotating the blade 7 the sub frame 5 is extended to its first length in which it projects over the root end 8 of the rotor blade 7. By this measure, it can be assured that the root end 8 of the rotor blade 7 is far enough away from the mounting section 29 of the rotor hub 31 so that the root section 8 does not come into contact with the mounting section during the tilting process. When the tilting by further lifting the main frame 3 is finished, the cross beam 39 at the second sub frame end 23 contacts the first main frame end 9, and the hooks 45 snap in so that the sub frame 5 is secured against rotating back into the first tilt position. Please note, that the hooks could alternatively be located at the sub frame 5 if a suitable coross beam is present at the first end 9 of the main frame 3. Moreover, the hooks could snap into the rods rather than into a cross beam.

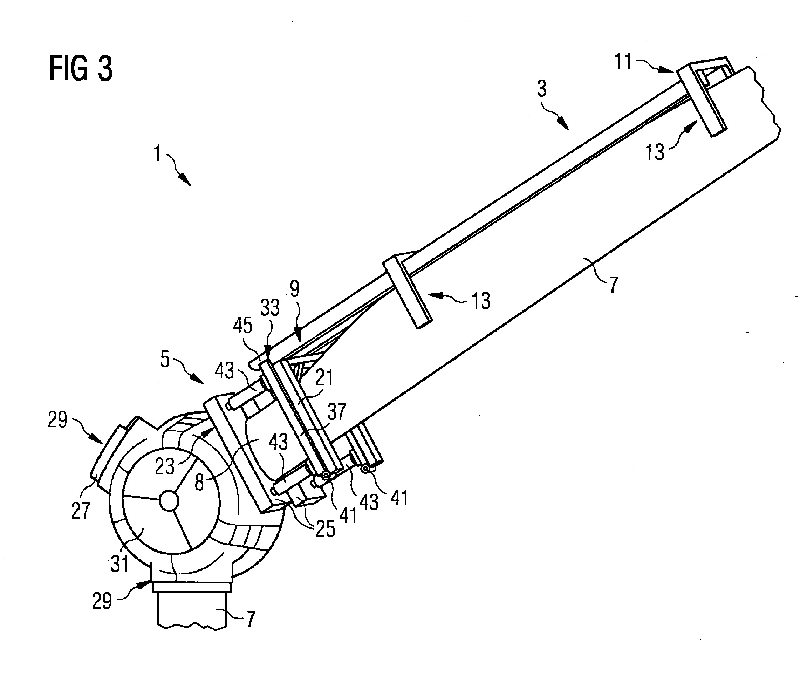

After the second tilt position is reached, the hydraulic pistons 43 of the sub frame contract, thereby moving the root 8 of the rotor blade 7 towards the mounting section 29. This movement is stopped when the root contacts to the mounting section 29, as it is shown in Figure 3. Then, the rotor blade 7 is fixed to the mounting section 29 by means of bolts. After fixing the rotor blade 7 to the mounting section 29 the lifting frame 1 can be released from the blade 7 and lowered to the ground for lifting the next rotor blade.

The described method can be used for assembling a wind turbine rotor with the rotor hub 31 already being located at the tower top. In this method, the rotor hub 31 is rotated such that two of its mounting sections 29 show upwards by an angle of 30° with respect to the horizontal direction. In this orientation the rotor hub 31 is fixed. Then the first wind turbine rotor blade 7 is fixed to one of the mounting sections 29 showing upwards by using the described method of mounting a wind turbine rotor blade 7 to a mounting section 29 of a rotor hub 31. After the first rotor blade 7 has been mounted to the hub 31 the fixing of the rotor hub is released so that gravity pull acting on the rotor blade 7 turns the hub until the rotor blade 7 shows downwards, and the rotor hub 31 is fixed again in this orientation. In this situation, the two remaining free mounting sections 29 both show upwards by an angle of 30° with respect to the horizontal direction. The second rotor blade is fixed to the rotor hub by use of the method described above. After the second rotor blade has been mounted the third rotor blade is lifted to the rotor hub 31 and mounted to the last one of the mounting sections 29 by use of the method described above.

However, while two of the rotor blades will be mounted with the trailing edges showing upwards the last rotor blade will be mounted with the trailing edge showing downwards, or vice versa. In order to allow the lifting frame 1 to be used in both cases, i.e. with the trailing edge showing upwards as well as with the trailing edge showing downwards, the seats 13 have an arcuate section 47 the curvature of which is adapted to the curvature at the leading edge 49 of the rotor blade 7 (see Fig. 4). In the middle of the arcuate section 47, a recess 51 is present the shape of which is adapted to the shape of the trailing edge 53 of the wind turbine rotor blade 7 (see Fig. 5). Hence, a rotor blade can be mounted to the main frame 3 either with the trailing edge 53 showing upwards, like it is shown in Figure 5, or with the trailing edge showing downwards, as it is shown in Figure 4.

A further development of the lifting frame, in particular of the main frame 3, is shown in Figures 6 and 7. The further development serves for equally distributing the load acting on the blade mount sections 13. In this development, the main frame 3 is equipped with a connecting means for connecting it to a crane hook 54 which connecting means comprises pulleys 55,56 that are located at, or close to, the first main frame end 9 and the second main frame end 11. In the middle of the main frame 3, a tensioning winch 57 is present that can be rotated by means of a motor, e.g. an electrical motor, which can be controlled either by the crane operator or by a person located on the ground or in the rotor hub. The drive motor 59 is only shown schematically in Figure 4 and Figure 5.

A rope 61 is wound around the tensioning winch 59 and runs from there over the pulleys 55,56 to the crane hook 54. By rotating the tensioning winch 57 using the drive motor 59 the rope section running along the pulley 56 at the second main frame end 11 to the crane hook 54 can be shortened. At the same time, the rope section running to the pulley 55 located at the first main frame end 9 and from there to the crane hook 54 will be lengthened. By this measure, tilting the sub frame 5 and the main frame 7 relative to each other will be performed without changing the load distribution to the blade mount sections 13.

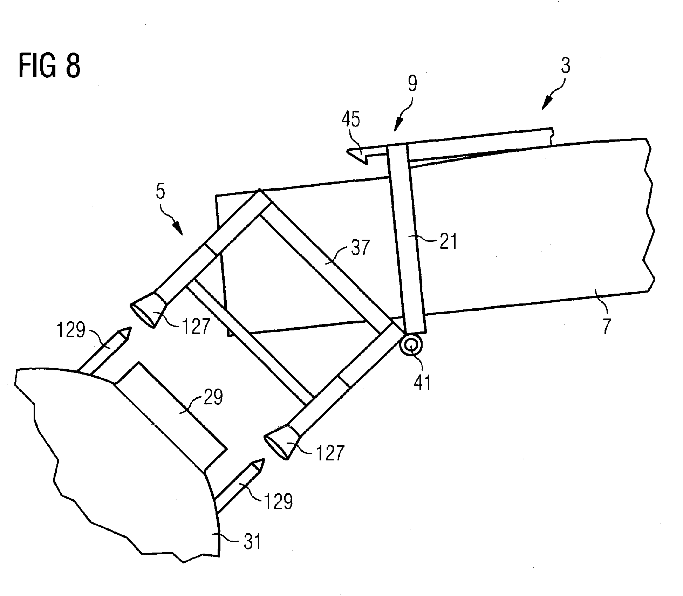

A variation of the lifting frame 1 is shown in Figure 8. Most of the features of the lifting frame according to the shown variation correspond to features of the embodiment shown so far. Hence, the description will be restricted to the differences with respect to the embodiment described with respect to Figures 1 to 3. Elements in Figure 8 which correspond to elements of Figures 1 to 3 are denominated with the same reference numerals as in the Figures 1 to 3 and will not be explained again.

The variation of the lifting frame 1 lies in the fixing means that is located at the first sub frame end 23. The fixing means are formed by funnel shaped receptors 127 the openings of which show towards the mounting section 29 of the rotor hub 31 when the sub frame 5 and the main frame 3 are in the first tilt position relative to each other and the blade has been lifted to the rotor hub 31. Pins 129 extend from the surface of the rotor hub 31 close to the mounting section 29. The receptors 127 are dimensioned such that the pins 129 can be introduced into the receptors. In this context, the funnel shape of the receptors simplifies 127 introduction of the pins 129 into the receptors. The pins 129 can either be part of the rotor hub 31 or of auxiliary elements that are attached to the rotor hub just for mounting the rotor blades 7 and that are removed again after the rotor blades 7 have been mounted. The funnel shaped receptors 127 can comprise a means for preventing the pins 129 from slipping out of the receptors 127, for example a securing pin or the like. However, such means are not mandatory if a substantial force acting in axial direction of the pins 129 can be avoided during the tilting process.

The present invention has been described with reference to specific embodiments for explaining the invention. However, the invention shall not be restricted to these embodiments since deviations from the embodiments within the scope of the appended claims are possible. For example, other fixing means than those described so far for fixing the sub frame 5 to the mounting section 29 of the rotor hub 31 could be used, e.g. means that can be introduced into the mounting section and fixed from the inside of the rotor hub. Moreover, while clamps 17 have been described as holding means for holding the rotor blade 7 in the blade mount of the main frame 3 other means could be used like, for example, belts wound around the free edge of the rotor blade 7. However, clamps are advantageous in that they also can prevent the blade from slipping towards the mounting section of the rotor hub during the tilting process. On the other hand, the blade could also be secured by other means, for example by securing wires with winches that run from the root end of the rotor blade to the main frame. At the same time, the length of the sub frame could be made constant since moving the rotor blade towards the mounting section could be done by the winches in the securing wires. When releasing the winches, gravity pull could be used to move the blade, which is angled by 30° with respect to the horizontal direction, towards the mounting section of the rotor hub.

## Claims

1. A lifting frame (1) for lifting a wind turbine rotor blade (7) to a rotor hub (31) by use of a lifting device connectable to the lifting frame (1), the lifting frame comprising:
- a main frame (3) extending in a main frame span direction from a first main frame end (9) to a second main frame end (11);
- a sub frame (5) extending in a sub frame span direction from a first sub frame end (23) to a second sub frame end (33) where the first sub frame end (23) comprises fixing means (25,127) for fixing it to a blade mounting section (29) of the rotor hub (31) and where the second sub frame end (33) is connected to the first main frame end (9) by means of a hinge (41) such that the main frame (3) and the sub frame (5) can be tilted into a first tilt position relative to each other, in which the sub frame span direction includes an angle with the main frame span direction, and into a second tilt position, in which the sub frame span direction runs parallel to the main frame span direction,
- a blade mount (15,17) being located at the main frame (3) and designed for receiving a wind turbine rotor blade (7) such that the span direction of the blade (7) runs substantially parallel to the main frame span direction and that the root end (8) projects beyond the first end (9) of the main frame (3),
- and a means (43) for moving the rotor blade (7) along the main frame span direction when the sub frame (5) and the main frame (3) are in the second tilt position relative to each other.

2. The lifting frame (1) according to claim 1, in which the means for moving the rotor blade (7) along the main frame span direction is a means (43) for varying the length of the sub frame (5) in the sub frame span direction from a first length to a second length shorter than the first length, and in which the root end (8) of a rotor blade (7) mounted to the main frame (3) projects beyond the first end (9) of the main frame (3) by a length less than the first length of the sub frame (5).

3. The lifting frame (1) according to claim 1 or claim 2, in which the hinge (41) is designed such that the sub frame span direction includes an angle of 30° with the main frame span direction in the first tilt position.

4. The lifting frame (1) according to any of the claims 1 to 3, in which the fixing means for fixing first sub frame end (23) to a blade mounting section (29) comprises a clamping device (25) which can opened and closed and which is designed such that it can be set on a flange (27) of a blade mounting section (29) when it is open and fixed to the flange (27) by closing it.

5. The lifting frame (1) according to any of the claims 1 to 3, in which the fixing means for fixing first sub frame end to a blade mounting section comprises at least one funnel shaped pin receptor (127).

6. The lifting frame (1) according to any of the claims 1 to 5, in which the fixing means (25) for fixing first sub frame end (23) to a blade mounting section (29) and/or the means (43) for varying the length of the sub frame is/are a hydraulically driven means.

7. The lifting frame (1) as claimed in claim 6, in which the means for varying the length of the sub frame (5) is formed by at least one piston (43) connecting the first sub frame end (23) to the second sub frame end (33).

8. The lifting frame (1) as claimed in any of the claims 1 to 7, which comprises a locking mechanism (45) for locking the sub frame (5) to the main frame (3) in the second tilt position.

9. The lifting frame (1) as claimed in any of the claims 1 to 8, in which the main frame (3) is equipped with a connecting means for connecting it to a crane hook (54), where the connecting means comprises
- a tensioning winch (57),
- pulleys (55,56) located at the first main frame end (9) and the second main frame end (11),
- at least one rope (61) that runs along the pulleys (55,56) and is wound around the tensioning winch (57), and
- a drive motor (59) for driving the tensioning winch (57).

10. A method of mounting a wind turbine rotor blade (7) to a rotor hub (31) with a blade mounting section (29) showing upwards by 30° with respect to the horizontal direction by use of a lifting frame (1) according to any of the preceding claims, in which
- the rotor blade (7) is lifted with the main frame span direction being parallel to the horizontal direction;
- the sub frame (5) is fixed to the mounting section (29) with the sub frame (5) being in the first tilt position;
- the sub frame (5) and the main frame (3) are brought into the second tilt position relative to each other after the sub frame (5) has been fixed to the mounting section (29);
- the rotor blade (7) is moved towards the mounting section (29) after the sub frame (5) and the main frame (3) have been brought into the second tilt position relative to each other;
- the rotor blade is mounted to the mounting section (29) with the sub frame (5) and the main frame (3) being in the second tilt position relative to each other.

11. A method of assembling a wind turbine rotor while the rotor hub (31) is already mounted to the top of a wind turbine tower, the method comprising the steps of
- fixing the rotor hub (31) in a first orientation in which one of the mounting sections (29) shows downwards and the remaining two mounting sections (29) show upwards by 30° with respect to the horizontal direction;
- mounting a first rotor blade (7) to one of the mounting sections (29) showing upwards by 30° by using the method according to claim 10;
- releasing the rotor (31) and rotating the rotor to a new orientation in which the mounted rotor blade (7) shows downwards, and fixing the rotor hub (31) in this new orientation;
- mounting the further rotor blades (7) by using the method according to claim 10.

## Patentansprüche

1. Heberahmen (1) zum Heben eines Windturbinen-Rotorblattes (7) zu einer Rotornabe (31) durch Verwendung einer Hebevorrichtung, die mit dem Heberahmen (1) verbindbar ist, wobei der Heberahmen umfasst:
- einen Hauptrahmen (3), der sich in einer Hauptrahmen-Spannrichtung von einem ersten Hauptrahmenende (9) zu einem zweiten Hauptrahmenende (11) erstreckt;
- einen Unterrahmen (5), der sich in einer Unterrahmen-Spannrichtung von einem ersten Unterrahmenende (23) zu einem zweiten Unterrahmenende (33) erstreckt, wobei das erste Unterrahmenende (23) Befestigungsmittel (25, 127) zu seiner Befestigung an einem Rotorblatt-Montageabschnitt (29) der Rotornabe (31) umfasst und wobei das zweite Unterrahmenende (33) mit dem ersten Hauptrahmenende (9) mittels eines Gelenks (41) verbunden ist, sodass der Hauptrahmen (3) und der Unterrahmen (5) in eine erste Kippposition relativ zueinander, in welcher die Unterrahmen-Spannrichtung einen Winkel mit der Hauptrahmen-Spannrichtung bildet, und in eine zweite Kippposition, in welcher die Unterrahmen-Spannrichtung parallel zu der Hauptrahmen-Spannrichtung verläuft, gekippt werden können;
- eine Rotorblatthalterung (15, 17), die an dem Hauptrahmen (3) angeordnet ist und dafür ausgebildet ist, ein Windturbinen-Rotorblatt (7) aufzunehmen, sodass die Spannrichtung des Blattes (7) im Wesentlichen parallel zu der Hauptrahmen-Spannrichtung verläuft und sodass das Fußende (8) über das erste Ende (9) des Hauptrahmens (3) hinaus vorsteht;
- und ein Mittel (43) zum Bewegen des Rotorblattes (7) entlang der Hauptrahmen-Spannrichtung, wenn sich der Unterrahmen (5) und der Hauptrahmen (3) in der zweiten Kippposition relativ zueinander befinden.

2. Heberahmen (1) nach Anspruch 1, wobei das Mittel zum Bewegen des Rotorblattes (7) entlang der Hauptrahmen-Spannrichtung ein Mittel (43) zum Ändern der Länge des Unterrahmens (5) in der Unterrahmen-Spannrichtung von einer ersten Länge zu einer zweiten Länge ist, die kleiner als die erste Länge ist, und wobei das Fußende (8) eines an dem Hauptrahmen (3) angebrachten Rotorblattes (7) über das erste Ende (9) des Hauptrahmens (3) hinaus um eine Länge vorsteht, die kleiner als die erste Länge des Unterrahmens (5) ist.

3. Heberahmen (1) nach Anspruch 1 oder Anspruch 2, wobei das Gelenk (41) derart ausgebildet ist, dass die Unterrahmen-Spannrichtung in der ersten Kippposition einen Winkel von 30° mit der Hauptrahmen-Spannrichtung bildet.

4. Heberahmen (1) nach einem der Ansprüche 1 bis 3, wobei das Befestigungsmittel zum Befestigen des ersten Unterrahmenendes (23) an einem Rotorblatt-Montageabschnitt (29) eine Klemmvorrichtung (25) umfasst, welche geöffnet und geschlossen werden kann und welche derart ausgebildet ist, dass sie auf einen Flansch (27) eines Rotorblatt-Montageabschnitts (29) aufgesetzt werden kann, wenn sie geöffnet ist, und an dem Flansch (27) befestigt werden kann, indem sie geschlossen wird.

5. Heberahmen (1) nach einem der Ansprüche 1 bis 3, wobei das Befestigungsmittel zum Befestigen des ersten Unterrahmenendes an einem Rotorblatt-Montageabschnitt mindestens einen trichterförmigen Bolzenaufnehmer (127) umfasst.

6. Heberahmen (1) nach einem der Ansprüche 1 bis 5, wobei das Befestigungsmittel (25) zum Befestigen des ersten Unterrahmenendes (23) an einem Rotorblatt-Montageabschnitt (29) und/oder das Mittel (43) zum Ändern der Länge des Unterrahmens ein hydraulisch angetriebenes Mittel sind/ist.

7. Heberahmen (1) nach Anspruch 6, wobei das Mittel zum Ändern der Länge des Unterrahmens (5) von mindestens einem Kolben (43) gebildet wird, der das erste Unterrahmenende (23) mit dem zweiten Unterrahmenende (33) verbindet.

8. Heberahmen (1) nach einem der Ansprüche 1 bis 7, welcher einen Verriegelungsmechanismus (45) zum Verriegeln des Unterrahmens (5) mit dem Hauptrahmen (3) in der zweiten Kippposition umfasst.

9. Heberahmen (1) nach einem der Ansprüche 1 bis 8, wobei der Hauptrahmen (3) mit einem Verbindungsmittel ausgestattet ist, um ihn mit einem Kranhaken (54) zu verbinden, wobei das Verbindungsmittel umfasst:
- eine Spannwinde (57);
- Seilrollen (55, 56), die an dem ersten Hauptrahmenende (9) und an dem zweiten Hauptrahmenende (11) angeordnet sind;
- mindestens ein Seil (61), welches entlang der Seilrollen (55, 56) verläuft und um die Spannwinde (57) herumgewickelt ist; und
- einen Antriebsmotor (59) zum Antreiben der Spannwinde (57).

10. Verfahren zum Montieren eines Windturbinen-Rotorblattes (7) an einer Rotornabe (31) mit einem Rotorblatt-Montageabschnitt (29), der bezüglich der horizontalen Richtung um 30° nach oben zeigt, durch Verwendung eines Heberahmens (1) nach einem der vorhergehenden Ansprüche, wobei
- das Rotorblatt (7) gehoben wird, wobei die Hauptrahmen-Spannrichtung parallel zu der horizontalen Richtung ist;
- der Unterrahmen (5) an dem Montageabschnitt (29) befestigt wird, wobei sich der Unterrahmen (5) in der ersten Kippposition befindet;
- der Unterrahmen (5) und der Hauptrahmen (3) in die zweite Kippposition relativ zueinander gebracht werden, nachdem der Unterrahmen (5) an dem Montageabschnitt (29) befestigt worden ist;
- das Rotorblatt (7) in Richtung des Montageabschnitts (29) bewegt wird, nachdem der Unterrahmen (5) und der Hauptrahmen (3) in die zweite Kippposition relativ zueinander gebracht worden sind;
- das Rotorblatt an dem Montageabschnitt (29) montiert wird, wobei sich der Unterrahmen (5) und der Hauptrahmen (3) in der zweiten Kippposition relativ zueinander befinden.

11. Verfahren zum Zusammenbauen eines Windturbinenrotors, wenn die Rotornabe (31) bereits am oberen Ende eines Windturbinenturms angebracht ist, wobei das Verfahren die folgenden Schritte umfasst:
- Arretieren der Rotornabe (31) in einer ersten Ausrichtung, in welcher einer der Montageabschnitte (29) nach unten zeigt und die übrigen zwei Montageabschnitte (29) unter einem Winkel von 30° bezüglich der horizontalen Richtung nach oben zeigen;
- Montieren eines ersten Rotorblattes (7) an einem der Montageabschnitte (29), die unter einem Winkel von 30° nach oben zeigen, unter Anwendung des Verfahrens nach Anspruch 10;
- Lösen des Rotors (31) und Drehen des Rotors bis zu einer neuen Ausrichtung, bei welcher das montierte Rotorblatt (7) nach unten zeigt, und Arretieren der Rotornabe (31) in dieser neuen Ausrichtung;
- Montieren der weiteren Rotorblätter (7) unter Anwendung des Verfahrens nach Anspruch 10.

## Revendications

1. Cadre de levage (1) permettant de lever une pale de rotor d'éolienne (7) vers un moyeu de rotor (31) en utilisant un dispositif de levage raccordable au cadre de levage (1), le cadre de levage comprenant :
- un cadre principal (3) s'étendant dans une direction de portée de cadre principal depuis une première extrémité de cadre principal (9) vers une deuxième extrémité de cadre principal (11) ;
- un cadre secondaire (5) s'étendant dans une direction de portée de cadre secondaire depuis une première extrémité de cadre secondaire (23) vers une deuxième extrémité de cadre secondaire (33) où la première extrémité de cadre secondaire (23) comprend des moyens de fixation (25, 127) permettant de la fixer à une section de montage de pale (29) du moyeu de rotor (31) et où la deuxième extrémité de cadre secondaire (33) est raccordée à la première extrémité de cadre principal (9) au moyen d'une articulation (41) de telle sorte que le cadre principal (3) et le cadre secondaire (5) peuvent être inclinés dans une première position inclinée l'un par rapport à l'autre, dans laquelle la direction de portée de cadre secondaire comprend un angle avec la direction de portée de cadre principal, et dans une deuxième position inclinée, dans laquelle la direction de portée de cadre secondaire est parallèle à la direction de portée de cadre principal,
- un support de montage de pale (15, 17) situé au niveau du cadre principal (3) et conçu pour recevoir une pale de rotor d'éolienne (7) de telle sorte que la direction de portée de la pale (7) est sensiblement parallèle à la direction de portée de cadre principal et que l'extrémité de base (8) dépasse au-delà de la première extrémité (9) du cadre principal (3),
- et un moyen (43) permettant de déplacer la pale de rotor (7) le long de la direction de portée de cadre principal lorsque le cadre secondaire (5) et le cadre principal (3) se trouvent dans la deuxième position inclinée l'un par rapport à l'autre.

2. Cadre de levage (1) selon la revendication 1, dans lequel le moyen permettant de déplacer la pale de rotor (7) le long de la direction de portée de cadre principal est un moyen (43) permettant de moduler la longueur du cadre secondaire (5) dans la direction de portée de cadre secondaire d'une première longueur à une deuxième longueur plus courte que la première longueur, et dans lequel l'extrémité de base (8) d'une pale de rotor (7) montée sur le cadre principal (3) dépasse au-delà de la première extrémité (9) du cadre principal (3) d'une longueur inférieure à la première longueur du cadre secondaire (5).

3. Cadre de levage (1) selon la revendication 1 ou la revendication 2, dans lequel l'articulation (41) est conçue de telle sorte que la direction de portée de cadre secondaire comprend un angle de 30° avec la direction de portée de cadre principal dans la première direction inclinée.

4. Cadre de levage (1) selon l'une quelconque des revendications 1 à 3, dans lequel les moyens de fixation permettant de fixer la première extrémité de cadre secondaire (23) à une section de montage de pale (29) comprennent un dispositif de serrage (25) qui peut être ouvert et fermé et qui est conçu de telle sorte qu'il peut être placé sur un rebord (27) d'une section de montage de pale (29) lorsqu'il est ouvert et fixé au rebord (27) en étant refermé.

5. Cadre de levage (1) selon l'une quelconque des revendications 1 à 3, dans lequel les moyens de fixation permettant de fixer la première extrémité de cadre principal à une section de montage de pale comprennent au moins un récepteur de broche en forme d'entonnoir (127).

6. Cadre de levage (1) selon l'une quelconque des revendications 1 à 5, dans lequel le moyen de fixation (25) permettant de fixer la première extrémité de cadre secondaire (23) à une section de montage de pale (29) et/ou le moyen (43) permettant de moduler la longueur du cadre secondaire est/sont un moyen à entraînement hydraulique.

7. Cadre de levage (1) selon la revendication 6, dans lequel le moyen permettant de moduler la longueur du cadre secondaire (5) est formé par au moins un piston (43) connectant la première extrémité de cadre secondaire (23) à la deuxième extrémité de cadre secondaire (33).

8. Cadre de levage (1) selon l'une quelconque des revendications 1 à 7, qui comprend un mécanisme de blocage (45) permettant de bloquer le cadre secondaire (5) au cadre principal (3) dans la deuxième position inclinée.

9. Cadre de levage (1) selon l'une quelconque des revendications 1 à 8, dans lequel le cadre principal (3) est équipé d'un moyen de raccordement permettant de le raccorder à un crochet de grue (54), où le moyen de raccordement comprend
- un treuil de tensionnage (57),
- des poulies (55, 56) situées à la première extrémité de cadre principal (9) et à la deuxième extrémité de cadre principal (11),
- au moins un câble (61) qui court le long des poulies (55, 56) et est enroulé autour du treuil de tensionnage (57), et
- un moteur d'entraînement (53) permettant d'entraîner le treuil de tensionnage (57).

10. Procédé de montage d'une pale de rotor d'éolienne (7) sur un moyeu de rotor (31) avec une section de montage de pale (29) orientée vers le haut de 30° par rapport à la direction horizontale en utilisant un cadre de levage (1) selon l'une quelconque des revendications précédentes, dans lequel
- la pale de rotor (7) est levée avec la direction de portée de cadre principal qui est parallèle à la direction horizontale ;
- le cadre secondaire (5) est fixé à la section de montage (29) avec le cadre secondaire (5) se trouvant dans la première position inclinée ;
- le cadre secondaire (5) et le cadre principal (3) sont amenés dans la deuxième position inclinée l'un par rapport à l'autre une fois que le cadre secondaire (5) a été fixé à la section de montage (29) ;
- la pale de rotor (7) est déplacée vers la section de montage (29) une fois que le cadre secondaire (5) et le cadre principal (3) ont été amenés dans la deuxième position inclinée l'un par rapport à l'autre ;
- la pale de rotor est montée sur la section de montage (29) avec le cadre secondaire (5) et le cadre principal (3) se trouvant dans la deuxième position inclinée l'un par rapport à l'autre.

11. Procédé d'assemblage d'un rotor d'éolienne alors que le moyeu de rotor (31) est déjà monté au sommet d'un mât d'éolienne, le procédé comprenant les étapes de
- fixation du moyeu de rotor (31) selon une première orientation dans laquelle l'une des sections de montage (29) est orientée vers le bas et les deux sections de montage (29) restantes sont orientées vers le haut de 30° par rapport à la direction horizontale ;
- montage d'une première pale de rotor (7) sur l'une des sections de montage (29) orientées vers le haut de 30° en utilisant le procédé selon la revendication 10 ;
- libération du rotor (31) et rotation du rotor selon une nouvelle orientation dans laquelle la pale de rotor montée (7) est orientée vers le bas, et fixation du moyeu de rotor (31) selon cette nouvelle orientation ;
- montage des autres pales de rotor (7) en utilisant le procédé selon la revendication 10.
